# EUROPÄISCHE PATENTANMELDUNG

(11) **EP 1 548 550 A2**
(43) Veröffentlichungstag der Anmeldung: **29.06.2005**
(21) Anmeldenummer: 04105643.3
(22) Anmeldetag: 09.11.2004
(51) Int. Cl.: G06F 3/02

(54) **Flexible Anzeigeeinheit für Benutzereingabe und Gerät mit einer solchen Anzeigeeinheit**

(30) Priorität: 27.11.2003 DE 10355415
(71) Anmelder: SIEMENS AKTIENGESELLSCHAFT, 80333 München (DE)
(72) Erfinder: Schrepfer, Günter, 82024, Taufkirchen (DE)

(57) **Zusammenfassung**

Die Erfindung betrifft eine Anzeigeeinheit (1) zum Darstellen von Bildinhalten, die flexibel gestaltet ist und durch Verbiegen Eingabe von Steuerinformation ermöglicht. Diese Anzeigeeinheit weist folgende Komponenten auf:
ein erstes flexibles Flächenelement (2) und ein zweites flexibles Flächenelement (3), die an einer Befestigungsstelle (4) aneinander befestigt sind;
ein Messelement zum Erfassen einer Verschiebung der flexiblen Flächenelemente zueinander, welche aufgrund einer Verbiegung von dem ersten flexiblen Flächenelement (2) und
zweitem flexiblen Flächenelement (3) zwischen der Befestigungsstelle (4) und dem Messelement auftritt, und zum Ausgeben eines der Verschiebung entsprechenden elektrischen Signals;
Umwandlungseinheit zum Umwandeln des elektrischen Signals in Steuerinformation.

## Beschreibung

Die Erfindung betrifft eine flexible Anzeigeeinheit und ein elektrisches Gerät mit einer flexiblen Anzeigeeinheit.

Kommunikationsgeräte, wie beispielsweise Mobiltelefone oder tragbare Computer, erfuhren in den letzten Jahren eine fortschreitende Miniaturisierung, um den Gebrauch unterwegs zu erleichtern. Diese fortschreitende Miniaturisierung bringt neben der besseren Tragbarkeit anderseits erhebliche Probleme hinsichtlich des Komforts der Bedienung mit sich. Auf Grund der im Vergleich zu früheren Kommunikationsgeräten kleineren Gehäuseoberfläche ist es nicht mehr möglich, diese mit einer dem Funktionsumfang der Geräte entsprechenden Anzahl von Tasten zu versehen.

Da auch die zunehmende Mehrfachbelegung von Tasten dem Bedienkomfort nicht zuträglich ist, werden zunehmend auch die Eingabeeinheiten, beispielsweise die Tastatur, in andere Geräteteile integriert. Insbesondere die Verbindung zwischen einer Anzeigeeinheit bzw. Display und einer Eingabeeinheit, beispielsweise als sogenannte "Touch Screens", d.h. eines berührungssensitiven Schirms, wird vielfach verwendet.

Beispielsweise bei den auf Kapazitätsänderungen basierenden Touch Screens erfolgt eine Eingabe dadurch, dass eine Kapazität in einem gewissen Bereich des Touch Screens verändert wird, wodurch ein Steuersignal zum Durchführen einer Funktion generierbar ist.

Da eine Eingabe über einen Druck mit der Fingerkuppe relativ viel Platz erfordert, wird zumeist ein zusätzlicher Stift erforderlich, mit welchem die Auswahl auf dem Touch Screen getroffen wird. Dieser zusätzliche Stift verschlechtert wiederum die Handhabbarkeit des Kommunikationsgerätes, da nun entweder beide Hände oder eine Auflagefläche nötig sind, und eben auch der zusätzliche Stift mitgeführt werden muss.

Ausgehend von diesem Stand der Technik ist es Aufgabe der vorliegenden Erfindung, eine Möglichkeit zu schaffen, mittels der sich auch Informationen einfach und ohne zusätzliche Hilfsmittel eingeben lassen.

Diese Aufgabe wird durch die unabhängigen Ansprüche gelöst. Vorteilhafte Weiterbildungen sind Gegenstand der abhängigen Ansprüche.

Bei einer flexiblen Anzeigeeinheit ist zumindest ein erstes flexibles Flächenelement und ein zweites flexibles Flächenelement vorgesehen. Diese sind übereinander bzw. parallel zueinander angeordnet und an einer vorgegebenen Befestigungsstelle aneinander befestigt. Wird nun die flexible Anzeigeeinheit verbogen, so bewegen bzw. verschieben sich erstes und zweites flexibles Flächenelement relativ zueinander. Diese relative Verschiebung zueinander kann über ein Messelement erfasst werden. Die vom Messelement erfasste Verschiebung wird in ein elektrisches Signal umgewandelt, welches als Steuerinformation verwendet wird.

Mit einer derartigen flexiblen Anzeigeeinheit können ein oder mehrere Eingabefunktionen oder Werte vom Benutzer beeinflusst werden. Dadurch wird ein Eingabeelement realisiert, welches zusätzlich zu bisherigen, wie beispielsweise Tasten, Kippschalter, Steuerknüppel, Maus usw., oder allein verwendet werden kann.

Bei der alleinigen Verwendung der flexiblen Anzeigeeinheit als Eingabeelement oder z.B. einer durch die zusätzlichen Eingabemöglichkeiten bei der flexiblen Anzeigeeinheit möglichen Verringerung der Tastenanzahl kann somit ein elektrisches Gerät, in das diese Anzeigeeinheit eingebaut wird, miniaturisiert werden.

Alternativ können so bei gleichbleibender Größe des elektrischen Geräts erweiterte Eingabemöglichkeiten vorgesehen werden.

Bei den flexiblen Flächenelementen kann es sich beispielsweise um eine Folie oder flexible Leiterplatte handeln. Dies hat den Vorteil, dass beispielsweise Folien auch Mehrfachfunktionalität wahrnehmen können, wie beispielsweise eine Verwendung als Display. Eine flexible Leiterplatte kann zugleich zur elektronischen Beschaltung verwendet werden.

Das Messelement kann eine leitfähige Struktur aufweisen, die auf dem ersten oder auf dem zweiten Flächenelement oder beiden aufgebracht ist. Mit leitfähigen Strukturen lassen sich kapazitive oder induktive Messelemente realisieren.

Die Erfindung wird im Folgenden anhand ausgewählter Beispiele unter Zuhilfenahme von Figuren näher erläutert.

Es zeigen:
- Figur 1: Eine flexible Anzeigeeinheit mit flexiblen Flächenelementen.;
- Figur 2: eine Verbiegung der flexiblen Anzeigeeinheit aus Figur 1;
- Figur 3: eine andere Verbiegung der flexiblen Anzeigeeinheit aus Figur 1;
- Figur 4: eine Ausgestaltung einer leitfähigen Struktur auf den flexiblen Flächenelementen; und
- Figur 5: eine andere Ausgestaltung einer leitfähigen Struktur auf einer flexiblen Flächenelement.

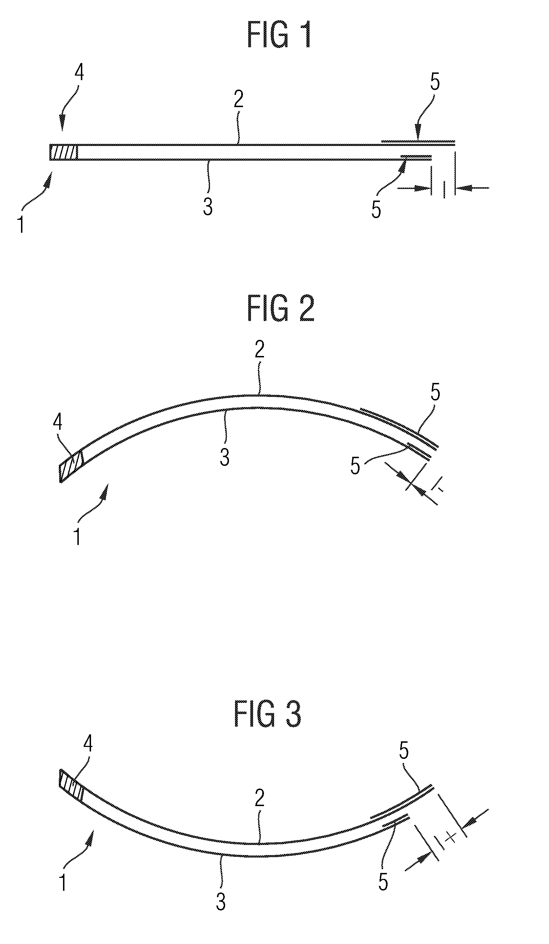

In Figur 1 ist eine flexible Anzeigeeinheit 1 zu sehen, welche zumindest ein erstes flexibles Flächenelement 2 und ein zweites flexibles Flächenelement 3 aufweist, wobei das erste 2 und das zweite flexible Flächenelement 3 übereinander bzw. parallel zueinander angeordnet sind. Das erste flexible Flächenelement 2 und das zweite flexible Flächenelement 3 sind an einer vorgesehenen Befestigungsstelle 4 aneinander befestigt. Das bedeutet, dass an dieser Befestigungsstelle 4 sich das erste 2 und das zweite flexible Flächenelement zueinander verschieben bzw. bewegen.

Auf zumindest dem ersten flexiblen Flächenelement 2 oder dem zweiten flexiblen Flächenelement 3 befindet sich eine leitfähige Struktur 5, über die eine Verschiebung von dem ersten flexiblen Flächenelement 2 zum zweiten flexiblen Flächenelement 3 gemessen werden kann.

Die leitfähigen Strukturen stellen somit einen Teil einer Messeinrichtung dar.

In Figur 1 ist die flexible Anzeigeeinheit 1 in unverbogenem Zustand bzw. Ausgangszustand gezeigt. Hierbei sind die leitfähigen Strukturen 5 jeweils im jeweiligen Randbereich des ersten flexiblen Flächenelements 2 und des zweiten flexiblen Flächenelements 3 angeordnet. Anders ausgedrückt befinden sich die leitfähigen Strukturen 5 an den in Bezug auf die Befestigungsstelle entgegengesetzten Enden des ersten 2 und des zweiten flexiblen Flächenelements.

Beide Flächenelemente können - wie in Fig. 1 gezeigt - unterschiedlich groß sein. Dies hat den Vorteil, dass leitfähige Strukturen unmittelbar am Rand der flexiblen Flächenelemente aufgebracht werden können. In dem in Fig.1 gezeigten, unverbogenen Zustand weichen dann die Ränder bzw. Enden der leitfähigen Strukturen um eine Strecke 1 voneinander ab. Die Länge dieser Strecke und damit die Lage der leitfähigen Struktur 5 auf dem ersten flexiblen Flächenelement 2 zur leitfähigen Struktur 5 auf dem zweiten flexiblen Flächenelement 3 ändert sich in Abhängigkeit von der Verbiegung der flexiblen Anzeigeeinheit 1, was einer Messung zugänglich ist. Beispielsweise ergibt sich dadurch bei einer kapazitiven Messeinrichtung eine Kapazitätsänderung.

In Figur 2 ist die flexible Anzeigeeinheit in einem verbogenen Zustand zu sehen. Dadurch, dass erstes und zweites flexibles Flächenelement an der Befestigungsstelle 4 aneinander befestigt sind, bewegen sich das erste flexible Flächenelement 2 und das zweite flexible Flächenelement 3 und damit die jeweiligen leitfähigen Strukturen 5 relativ zueinander. Damit verringert sich beispielsweise der Abstand der Ränder der beiden leitfähigen Strukturen 5 zueinander, was in der Zeichnung durch 1- gekennzeichnet ist.

In Figur 3 ist eine Verbiegung der flexiblen Anzeigeeinheit 1 in die zu Figur 2 entgegengesetzte Richtung zu sehen. In diesem Fall bewegt sich die leitfähige Struktur 5 in der zweiten flexiblen Flächenelement 3 relativ zur leitfähigen Struktur 5 auf der ersten flexiblen Flächenelement 2 so, dass der Abstand der äußeren Ränder vergrößert ist, was in der Zeichnung durch die Größe 1+ gekennzeichnet ist.

Bei dem ersten flexiblen Flächenelement 2 oder/und dem zweiten flexiblen Flächenelement 3 kann es sich beispielsweise um Kunststofffolien, wie etwa Folien aus Polyamid, Polyproylen oder PFTE (Teflon) oder ähnlichen Materialien handeln. Die Befestigung der beiden flexiblen Flächenelemente aneinander kann durch Verschweißen oder Verkleben erfolgen. Die Wahl der geeigneten Befestigungsmethode hängt von den verwendeten Materialien ab und von der Geometrie der Befestigungsstelle. Beispielsweise kann ein Verkleben günstig sein für großflächige Befestigungsstellen.

Weiterhin kann eines der beiden flexiblen Flächenelemente ein integriertes Display aufweisen, welches zum Darstellen von Bildschirminhalten dient.

Eine Messeinrichtung kann beispielsweise auf induktiven oder kapazitiven Messmethoden beruhen. Der Vorteil dieser Messmethoden liegt darin, dass sie berührungslos durchgeführt werden können.

Für kapazitive Messeinrichtungen kann es sich bei der oder den leitfähigen Struktur(en) 5 um leitfähige Schichten verschiedener Geometrie handeln, welche auf das jeweilige flexible Flächenelement aufgebracht sind.

Bei induktiven Messeinrichtungen zur Messung der Verschiebung der flexiblen Flächenelement zueinander kann die leitfähige Struktur auf dem ersten flexiblen Flächenelement 2 aus einem Leiter bestehen, welcher von Strom durchflossen wird und auf dem zweiten flexiblen Flächenelement 3 beispielsweise aus einer Spule oder einem ebenfalls von Strom durchflossenen Leiter. Als leitfähiges Material kann beispielsweise Kupfer gewählt werden. Bei der Auswahl des Materials wird auch die Kompatibilität mit den übrigen Materialien der flexiblen Anzeigeeinheit 1 abgestellt.

Der Bereich, auf dem die leitfähige Struktur 5 jeweils aufgebracht wird, wird so gewählt, dass sich in diesem Bereich eine Verformung der flexiblen Anzeigeeinheit deutlich bemerkbar macht. Wie in Figur 1 gezeigt, kann beispielsweise die leitfähige Struktur 5 jeweils mit der flexiblen Flächenelement abschließen, das heißt im Bereich des Randes der flexiblen Flächenelement aufgebracht werden. Das hat in der gezeigten Geometrie auch den Vorteil, dass sich dieser Bereich möglichst weit von der Befestigungsstelle 4 befindet, wodurch die relative Verschiebung von erstem und zweitem flexiblen Flächenelement deutlich ist. Je nach Art und Größe der flexiblen Anzeigeeinheit 1 kann es jedoch auch ausreichend sein, die leitfähige Struktur oder die leitfähigen Strukturen 5 näher an der Befestigungsstelle 4 anzuordnen. Dies kann auch beispielsweise erforderlich sein, wenn der von der Befestigungsstelle entfernte Bereich beispielsweise durch andere Module belegt ist.

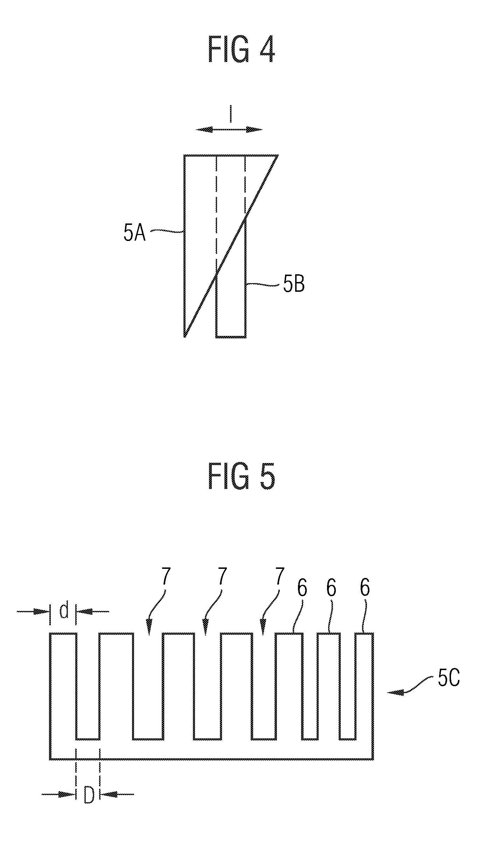

In Figur 4 ist nun eine vorteilhafte Ausgestaltung der leitfähigen Strukturen 5 auf den jeweiligen flexiblen Flächenelementen zu sehen. Beispielsweise ist die leitfähige Struktur 5A auf dem ersten flexiblen Flächenelement in der Ebene des flexiblen Flächenelements 2 in Form eines sich verjüngenden Balkens ausgebildet. Bewegt sich die leitfähige Struktur 5A auf dem ersten flexiblen Flächenelement relativ zu einer leitfähigen Struktur 5B auf dem zweiten flexiblen Flächenelement 3, so ändert sich die durch die leitfähigen Strukturen 5A und 5B gebildete Kapazität durch eine Änderung der Fläche der Kondensatorplatten. Je nach Ausgestaltung der Verjüngung kann auch die Größenänderung der Kapazität bestimmt werden.

In Figur 5 ist eine andere Ausgestaltung einer leitfähigen Struktur zu sehen, die beispielsweise auch mit einer rechteckigen Struktur wie der leitfähigen Struktur 5B auf dem zweiten Flächenelement 3 in Figur 4 oder der leitfähigen Struktur 5A auf dem ersten Flächenelement 2 in Figur 4 kombiniert werden kann. In Figur 5 wird die leitfähige Struktur 5C kammartig ausgebildet. Hierbei weisen Kammzacken 6 beispielsweise eine Breite d auf, während Zwischenräume 7 eine Breite D aufweisen.

Ist nun bei einer Abwandlung von Fig. 4 die leitfähige Struktur 5C beispielsweise auf dem zweiten flexiblen Flächenelement 3 aufgebracht, so ergibt sich während (des Ablaufs) einer Verbiegung eine sprunghafte Änderung der Kapazität mit der Verbiegung, abhängig davon, ob eine Kammzacke 6 oder ein Zwischenraum 7 in den Überlappbereich der beiden leitfähigen Strukturen heraus oder hinein wandert. Es können also Signalpulse erfasst werden, wobei hier die Anzahl der registrierten Signalpulse beginnend vom Ausgangszustand ein Maß für die Verbiegung ist.

Die Breiten d der Kammzacken 6 sowie die Breite D der Zwischenräume 7 kann in Abhängigkeit von der Gesamtgeometrie der flexiblen Anzeigeeinheit 1 gewählt werden. Insbesondere ist es auch vorgesehen, Kammzacken 6 oder Zwischenräume 7 unterschiedlich breit zu gestalten. So kann bei einer größeren relativen Verschiebung bei stärkerer Verbiegung Rechnung getragen werden, das heißt, dass zum Beispiel größere Verbiegungen nicht verzerrt, sondern noch linear erfasst werden. Dies ist von Vorteil bei der Generierung von Steuersignalen.

Die Steuersignale werden in Abhängigkeit von der Größe der Kapazität oder der Induktivität oder auch von einer Änderung der jeweiligen Größe generiert. Wie aus einer elektrischen Größe bzw. der Änderung einer elektrischen Größe ein Steuersignal abgeleitet wird, ist dem Fachmann bekannt, weshalb hier nicht näher darauf eingegangen wird.

Um mehrdimensionale Verbiegungen zu erfassen, kann eine leitfähige Struktur 5, 5A, 5B, 5C auch so ausgestaltet sein, dass sie nicht nur wie die leitfähige Struktur 5A oder die leitfähige Struktur 5C eine Änderung in einer Dimension aufweist, beispielsweise die Kammzacken oder der sich verjüngende Balken, sondern, dass sich die leitfähige Struktur auch in einer zweiten Dimension ändert.

Es können weiterhin auch mehr als zwei flexible Flächenelemente vorgesehen sein, beispielsweise um mehr Messgrößen zu generieren, um die Verbiegung sicherer zu erfassen.

### Bezugszeichenliste

- 1: flexible Anzeigeeinheit
- 2: erstes flexibles Flächenelement
- 3: zweites flexibles Flächenelement
- 4: Befestigungsstelle
- 5: leitfähige Struktur
- 5A: leitfähige Struktur in Form eines sich verjüngenden Balkens
- 5B: leitfähige Struktur in Form eines Rechtecks
- 5C: leitfähige Struktur in Form eines Kamms
- 6: Kammzacken
- 7: Zwischenräume

## Patentansprüche

1. Flexible Anzeigeeinheit (1) zum Darstellen von Bildinhalten und Eingeben von Steuerinformation durch Verbiegen der Anzeigeeinheit, welche folgende Komponenten aufweist:
a) ein erstes flexibles Flächenelement (2) und ein zweites flexibles Flächenelement (3), die an einer Befestigungsstelle (4) aneinander befestigt sind;
b) ein Messelement zum Erfassen einer Verschiebung der flexiblen Flächenelemente zueinander, welche aufgrund einer Verbiegung von dem ersten flexiblen Flächenelement (2) und zweitem flexiblen Flächenelement(3) zwischen der Befestigungsstelle (4) und dem Messelement auftritt, und zum Ausgeben eines der Verschiebung entsprechenden elektrischen Signals;
c) Umwandlungseinheit zum Umwandeln des elektrischen Signals in Steuerinformation.

2. Anzeigeeinheit (1) nach Anspruch 1, bei der es sich bei zumindest einem flexiblem Flächenelement (2,3) um eine Folie oder eine flexible Leiterplatte handelt.

3. Anzeigeeinheit (1) nach Anspruch 1 oder 2, bei der auf dem ersten (2) oder/und auf dem zweiten Flächenelement (3) eine leitfähige Struktur (5) aufgebracht ist.

4. Anzeigeeinheit (1) nach einem der vorhergehenden Ansprüche, bei der das Messelement jeweils eine leitfähige Struktur auf dem ersten (2) und dem zweiten flexiblen Flächenelement (3) umfasst.

5. Anzeigeeinheit (1) nach Anspruch 3 oder 4, bei der eine leitfähige Struktur (5) durch einen sich in der Ebene der Struktur nach einer Richtung hin verjüngenden Balken gebildet wird.

6. Anzeigeeinheit (1) nach einem der Ansprüche 3 bis 5, bei der eine leitfähige Struktur (5) eine kammartige Form aufweist.

7. Anzeigeeinheit (1) nach einem der Ansprüche 1 bis 6, bei der es sich bei dem Messelement um eine kapazitive oder induktive Messvorrichtung handelt.

8. Anzeigeeinheit (1) nach einem der Ansprüche 1 bis 7 bei der die flexiblen Flächenelemente (2,3) durch eine Schweißstelle oder eine Verklebung zwischen den flexiblen Flächenelementen aneinander befestigt werden.

9. Anzeigeeinheit (1) nach einem der vorhergehenden Ansprüche, welches ferner ein Display zum Darstellen der Bildinhalte aufweist, welches in einem der flexiblen Flächenelemente (2,3) integriert ist.

10. Elektrisches Gerät mit einer Anzeigeeinheit (1) nach einem der vorhergehenden Ansprüche.

11. Elektrisches Gerät nach Anspruch 10, welches als tragbares Kommunikationsgerät, insbesondere als Mobilfunkgerät, ausgebildet ist.
